# EUROPEAN PATENT SPECIFICATION

(11) **EP 2 523 447 B1**
(45) Date of publication and mention of the grant of the patent: **17.10.2018**
(21) Application number: 12166271.2
(22) Date of filing: 01.05.2012
(51) Int. Cl.: H04N 1/23, G06F 17/30, B41J 11/44, H04N 1/00

(54) **Method for managing print media**
Verfahren zur Verwaltung von Druckmedien
Procédé de gestion de support d'impression

(30) Priority: 13.05.2011 EP 11166094; 31.05.2011 US 201161491566 P
(43) Date of publication of application: 14.11.2012
(73) Proprietor: OCE-Technologies B.V., 5914 CA Venlo (NL)
(72) Inventor: Gerrits, Antonius Maria, 5941 AJ VELDEN (NL); Rijbroek, Dennis H.L., 5658 CL EINDHOVEN (NL); Thijssen, Abraham, 5821 BN VIERLINGSBEEK (NL); Nacken, Peter F.M., 5272 RK SINT-MICHIELSGESTEL (NL); Lichiardopol, Anca-Maria, 5914 WK VENLO (NL)
(74) Representative: OCE IP Department

(56) References cited:
- US-A1- 2007 189 827
- US-A1- 2008 165 807

## Description

### Field of the invention

The invention relates to a method for managing media in a system comprising at least two devices that are connected to a network, the devices being configured to perform a task for printing image data on an image receiving media, the devices having a media list with entries comprising media attributes for image receiving media, each entry comprising media identification attributes to distinguish individual image receiving media and additional attributes that are associated with the media. The invention further relates to a device configured to perform a task for printing image data on an image receiving medium and to a print system for printing an image on an image receiving material, the system comprising a device that is configured to perform the method for managing media.

### Background of the invention

Print systems for representing digital images in a printed form on image receiving media may comprise various devices for performing tasks such as editing the content of the image, applying page layout design, rendering the image and marking an image receiving medium, such as paper with a marking material such as toner or ink. The device for performing this last step is usually called a print engine, which is an essential part of devices such as copiers, printers and facsimile machines. In the state of the art various media may be employed for the printed output in these print systems. Each of these media has its own qualities, such as size, thickness, weight (per area unit), colour, gloss, etc. Depending on the required qualities and availability of the media, a medium for a specific print job is selected in a printer driver, in a job submitter or in the print engine itself at the time of making a print. On devices for print preparation the selection of an image receiving medium defines a job property for the print engine. On print engines the selection of an image receiving medium defines either a job property or a medium source, such as a media input tray, from which the medium may be obtained.

In conventional print engines one or more media input trays are employed from which the required medium is fed as sheets into the print engine for receiving the image. Media are sometimes also fed from a roll instead of as sheets. Associated with a medium are not only properties of the medium itself, but also properties that define how a print engine should handle the medium in order to obtain an optimal print quality or to secure an optimal performance of the print engine and achieve an optimal reliability. These properties comprise media handling parameters for registering the medium in the print engine, dwell time of the medium in one of the stages during printing, such as the time for fusing, and other parameters, such as the power for heating the medium before printing on it, or the time needed for drying. These media handling parameters are therefore not only dependent on the medium, but also on the specific print engine that is used to make the printed output.

Many different media exist and many parameters have to be entered for each medium. This may be done by manual editing, once the knowledge about the parameters is available. Several methods have been employed to overcome the tedious work of defining these media for every new device that is connected to a network with various devices. One of them is to compose a media catalog that contains all possible media and parameters. Such a catalog may also be downloaded from the internet. Systems in which this method is employed select from the catalog the media that are suitable to be handled by the devices in the system. However the almost infinite number of different media make this method rather circuitous. A second method has been described in the United States Patent US 7,648,293, where a central server comprises a media catalog for a cluster of printers. The central server not only obtains the parameters for the required media from the media catalog, but also selects the printer from the cluster that is able to process the required media and sets the parameters for the device-specific selection technique. When a new printer is added to the cluster, the media and the parameters that are associated with that printer are added to the catalog. This method is only applicable when the printers are arranged according to an architecture with a server.

In a general configuration of devices involved in the process of producing printed output, each device has its own media list. The user may select any medium from the list and even edit the list for the device he is working on. When a print job arrives at a print engine a selected medium is searched in the media list of the print engine and the associated parameters for the present engine are used in the process of printing. However, if the medium is not available in the media list of the print engine, a warning will be given to an operator indicating that the print job can not be executed. An operator of the print engine will have instructions how to cope with this situation. He can e.g. substitute the required medium by another, equivalent medium or he may send a message to the user of the print system to select another medium. For optimal productivity it is to be avoided that such a situation occurs. As an alternative the print engine may automatically use substitute, default parameters if the parameters that are needed for the combination of the selected medium and the print engine are not available, but then the printed output may be different from the intended output. When adding a new device to the configuration a new media list will have to be composed, which may involve extensive and tedious editing.

Therefore, a problem exists in the synchronisation of media lists in arbitrary configurations of devices involved in the process of producing printed output.

### Summary of the invention

According to the present invention the method of managing media in a system comprising at least two devices that are connected to a network, is improved by the steps of :
a) copying a media list of a first device to a temporary media list;
b) adding to the temporary media list an entry of a media list of a second device, if the media identification attributes of that entry do not match the media identification attributes of any entry of the temporary media list;
c) supplementing the additional attributes of an entry of the temporary media list with the additional attributes of an entry of the media list of a second device if the media identification attributes of both entries match; and
d) replacing the media list of the first device by the temporary media list.

This method makes it feasible that the media lists of two devices are synchronized without making constraints to the configuration the devices are arranged in. The method for each device is configured to control the media list of each device separately. After synchronisation according to this method the media lists of a first and second device are not identical, but the media list of the first device comprises all the entries for media of the second device that are also supported by the first device. Entries from the second device that are associated with media that are incompatible with the first device, are also comprised in the new media list of the first device. This enables passing entries from the media list of the second device to a third device without the second and third device being connected to a network at the same time. Each entry to a media list has identification attributes and additional attributes. Only when all of the identification attributes are the same, the method will consider the entries in the two media lists as associated with the same media. The method provides that a new entry is added to the media catalog if no matching media identification attributes are found, whereas additional attributes are supplemented to an existing entry if matching entries are found. The method may start automatically when a new device is added to a system comprising a second device that is compatible to perform the method, but a manual initiation can also be applied and the second device can be selected manually.

In an embodiment the media identification attributes comprise at least two attributes. In this way media will be discernable even though some attributes are equal. Entries for media will only be considered to relate to the same media if all media identification attributes are the same.

In an embodiment the identification attributes of an entry in the media list comprise a media name, a media width, a media height, a media weight and a media colour. This has the effect that the method will not confuse entries that have the same name, e.g. referring to the type of material, but dissimilar size or colour.

In an embodiment the step of supplementing the additional attributes uses merging rules that depend on the kind of attributes. The attributes may be of a kind that the most recent version is to be kept, e.g. when the attributes refer to information where to obtain the media, or the attributes may be of a kind that they provide additional information that is saved besides the already present attributes. The attributes may also be of a kind that the information present in either the receiving or the donating device is preserved.

In an embodiment the additional attributes comprise media description attributes that give additional information about a medium that is not dependent on the type of device that handles that medium, such as a medium thickness, a medium ordering number and a medium gloss parameter. The additional attributes may further comprise device specific attributes that contain parameters that specify parameters for handling the medium in a specific device type, such as a fuse temperature parameter, a decurl parameter and medium registration parameters.

The invention may be embodied in a device that is configured to perform a task for printing image data on an image receiving medium, comprising a memory for keeping a media list with entries comprising media attributes for image receiving media, each entry comprising media identification attributes to distinguish individual image receiving media and additional attributes that are associated with the media, communication means for communicating with a second device and a media list module for synchronisation of the media list with a media list of a second device.

Furthermore a print system for printing an image on an output receiving material may comprise at least two devices that are configured to synchronise their media lists according to the invented method.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### Brief description of the drawings

Fig. 1 shows a configuration of devices in which the method is applicable.
Fig. 2 shows a relation between the basic steps in the method.
Fig. 3 shows a circuit that is capable of executing the invented method.

### Detailed description of the embodiments

A number of embodiments will now be described in conjunction with the drawings, in which same reference numerals refer to like elements.

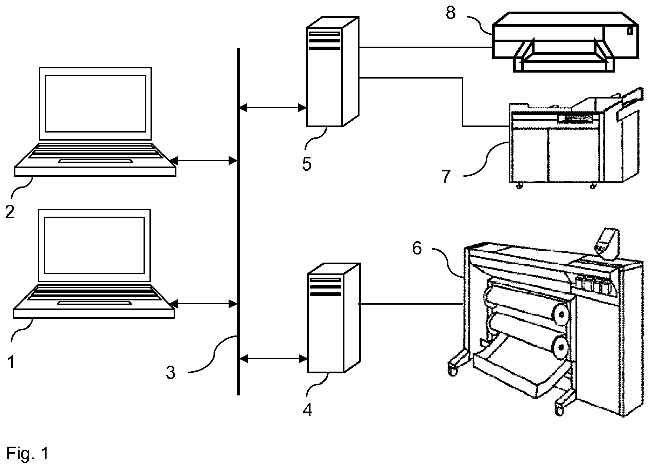

Figure 1 is a configuration of two workstations 1, 2, which are e.g. personal computers, that are coupled to the network 3. This may also be a wireless connection. This network may be a Local Area Network, or even the internet. On these workstations document preparation takes place and page layout design is performed which prepare the image for printing on the output devices 6, 7, and 8. In the figure external controllers, 4 and 5, are shown that receive the images from the workstations through a connection with the network 3. These external controllers schedule the various print jobs that are directed to the output devices and perform decidated tasks as rendering the image, applying colour management which are all device related tasks. The controllers are connected to the output devices by a bus with a high transfer rate, such as USB 2.0, USB 3, Firewire or optical data fiber, to transfer the large amount of data that are associated with the images to be printed in a reasonable time. The controllers may also be integrated into the output devices. The output devices 6, 7, and 8 are provided for printing images on image receiving members. These devices may use any kind of printing technique, including an inkjet printer, or a press system based on an electro-(photo)graphical technology, for instance. The inkjet printer may be for example a thermal inkjet printer, a piezoelectric inkjet printer or a continuous inkjet printer. A marking material to be disposed may be a fluid like an ink, or a solid like a toner product. The images are printed on a receiving medium such as a sheet of paper or paper supplied by a roll.

Each of the devices in the configuration may comprise a media list. On the workstations the media list is used to define how the printed output will look like. Therefore based on the size, type of material, and colour one of the receiving media is selected from the list on the workstation. In the (external) controller the rendering is dependent on the selected medium and the properties needed are read from the media list in the controller. In some cases the controller also maintains the media that are available in the print engine and sets all the parameters for the print engine, in which case the print engine will not have a separate media list. In such a configuration the controller wil indicate whether a new medium must be supplied to the engine. In general, the print engine may have its own media list for collecting the attributes that are used in the print process.

Each device having a media list is equiped with a module for executing the exchange of entries in the media list. This may for example be implemented with a HTTP-protocol in which a combination of POST and GET requests are used to transfer the complete media list of one of the devices to the requesting device. This device is then able to update its media list according to the rules of the method. Although it is feasible to have every device sorting out the entries and the attributes of the media in its own way, it is profitable to define a format for media lists, in which every attribute has a defining text that characterises the attribute. In that case the method of sorting out the attributes can be kept simple. It is essential that no media entry or attribute will be deleted when transferring a media list in order to be able to compose a media list that is synchronized throughout the configuration, independent of the source of the media list.

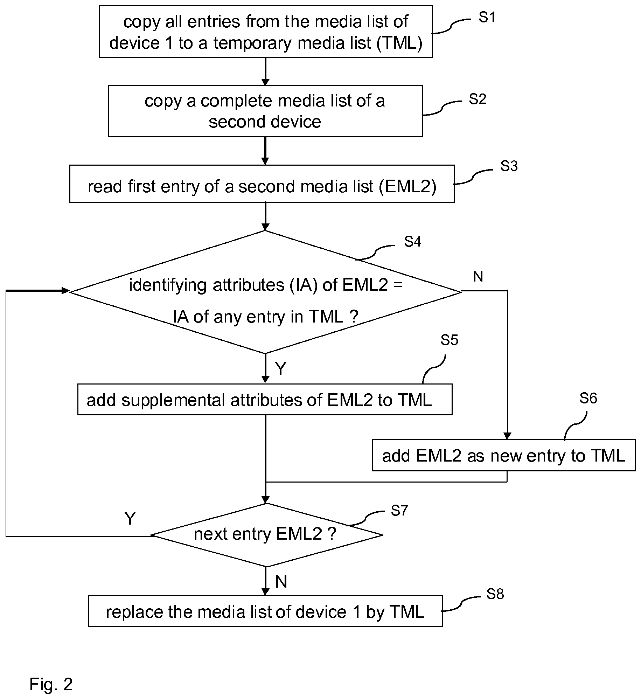

Figure 2 shows the basic steps of the method to manage the media in the devices. First, in S1, a copy is made of the media list of the first device, which is called a temporary media list, abbreviated as TML. In S2 a copy of a media list in a second device is obtained upon a request from the first device. This list has entries that will be indicated by EML2 as entries from the media list of the second device. In S3 a first entry is read from this media list. The identification attributes (IA) of this entry are compared to the identification attributes of each entry in the temporary media list (S4). If they are equal (Y), the supplemental attributes of EML2 are added to the entry in the TML, if not already present (S5). If they are not equal, which means that for every entry in the TML, one of the IA of EML2 deviates from the IA of the TML, the complete entry EML2 is copied into the TML as new entry (S6). This process is repeated for every entry EML2 of the media list that is obtained from the second device (S7). If there are no more entries, the process stops. The synchronisation method will be completed after copying the TML to the media list of the first device.

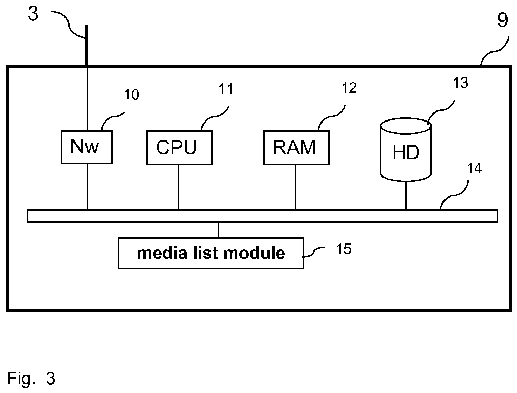

Figure 3 shows a circuit 9 that is capable of executing this method according to instructions implementing the outlined steps. This circuit may be part of each device that comprises a media list. The circuit is connected to a network 3 with a network adaptor Nw 10 which is connected to a central bus 14. A Central Processing Unit (CPU) 11 controls the actions on the circuit. Further a volatile memory module 12, such as RAM, a non-volatile memory module 13, such as a hard disk, and a module for executing the invented method 15 are connected to the central bus 14. Upon initiation of an operator of the device that comprises this circuit, the method will be executed to obtain an updated media list.

As an example of a format for the media lists, the following XML text indicates how the entries and attributes are inserted in a media list. This media list comprises two media with twelve identification attributes and two media description attibutes. For the first medium two devices are listed with ten device specific parameters each, whereas for the second medium only one device is comprised in the list with ten device specific parameters.

```
 <?xml version="1.0" encoding="utf-8"?>
 <MediaCatalog
       xmlns:xsi="http://www.w3.org/2001/XMLSchema-instance"
       xsi:noNamespaceSchemaLocation="mediacat.xsd"
       version="1.1"
       timestamp="2009-11-26TO9:30:10.5"
       >
   <MediaItem>
       <MediaIdentification>
               <MediaNarne>Océ Black Label</MediaName>
               <MediaType>
                      <CustomMediaType>MyPaper</CustomMediaType>
               </MediaType>
               <MediaSize>
                      <MediaWidth>2970</MediaWidth>
                      <MediaHeight>4200</MediaHeight>
                      <MediaSizeUnit>0.1mm</MediaSizeUnit>
               </MediaSize>
               <MediaWeight>
                      <Weight>120</Weight>
                      <MediaWeightUnit>g/m2</MediaWeightUnit>
               </MediaWeight>
               <MediaColor>
                      <CustomColor>mauve</CustomColor>
               </MediaColor>
               <PrepunchedMedia>0</PrepunchedMedia>
               <TabMedia>No</TabMedia>
               <Insert>No</Insert>
               <CycleLength/>1</CycleLength>
       </MediaIdentification>
       <MediaDescription>
               <MediaThickness>151</MediaThickness>
               <MediaDisplayColor R="96" G="49" B="129">
       </MediaDescription>
       <ProductDependentList>
               <ProductDependent DeviceType = "200">
                      <X-OffsetFront>3</X-OffsetFront>
                      <Z-OffsetFront>2</Z-OffsetFront>
                      <X-OffsetBack>-6</X-OffsetBack>
                      <Z-OffsetBack>12</Z-OffsetBack>
                      <X-HeightFront>11</X-HeightFront>
                      <X-HeightBack>8</X-HeightBack>
                      <FeedElongationBack>2</FeedElongationBack>
                      <FeedElongationFront>0</FeedElongationFront>
                      <DisableDoubleSheetDetection>No</DisableDoubleSheetDe
               tection>
                      <BlackImageFrequency>600</BlackImageFrequency>
               </ProductDependent>
               <ProductDependent DeviceType = "300">
                      <X-OffsetFront>-2</X-OffsetFront>
                      <Z-OffsetFront>4</Z-OffsetFront>
                      <X-OffsetBack>3</X-OffsetBack>
                      <Z-OffsetBack>2</Z-OffsetBack>
                      <X-HeightFront>1</X-HeightFront>
                      <X-HeightBack>1</X-HeightBack>
                      <FeedElongationBack>-1</FeedElongationBack>
                      <FeedElongationFront>-1</FeedElongationFront>
                      <ProcessInsert>No</ProcessInsert>
                      <Oriented>No</Oriented>
               </ProductDependent>
       </ProductdependentList>
       </MediaItem>
       <MediaItem>
       <MediaIdentification>
               <MediaName>Standard insert tabs</MediaName>
               <MediaType>
                      <StandardMediaType>Plain</StandardMediaType>
               </MediaType>
               <MediaSize>
                      <MediaWidth>2230</MediaWidth>
                      <MediaHeight>2970</MediaHeight>
                      <MediaSizeUnit>0.1 mm</MediaSizeUnit>
               </MediaSize>
               <MediaWeight>
                      <Weight>170</Weight>
                      <MediaWeightUnit>g/m2</MediaWeightUnit>
               </MediaWeight>
               <MediaColor>
                      <CustomColor>light blue</CustomColor>
               </MediaColor>
               <PrepunchedMedia>0</PrepunchedMedia>
               <TabMedia>TabInclusive</TabMedia>
               <Insert>Yes</Insert>
               <CycleLength/>7</CycleLength>
       </MediaIdentification>
       <MediaDescription>
               <MediaThickness>174</MediaThickness>
               <MediaDisplayColor R="255" G="255" B="255">
       </MediaDescription>
       <ProductDependentList>
               <ProductDependent DeviceType = "300">
                      <X-OffsetFront>0</X-OffsetFront>
                      <Z-OffsetFront>0</Z-OffsetFront>
                      <X-OffsetBack>0</X-OffsetBack>
                      <Z-OffsetBack>0</Z-OffsetBack>
                      <X-HeightFront>0</X-HeightFront>
                      <X-HeightBack>0</X-HeightBack>
                      <FeedElongationBack>0</FeedElongationBack>
                      <FeedElongationFront>0</FeedElongationFront>
                      <ProcessInsert>Yes</ProcessInsert>
                      <Oriented>Yes</Oriented>
               </ProductDependent>
       </ProductDependentList>
       </MediaItem>
       </MediaCatalog>
```

The skilled person will recognise that other embodiments are possible within the scope of the appended claims.

## Claims

1. Method for managing media in a system comprising at least two devices that are connected to a network, the devices being configured to perform a task for printing image data on an image receiving media, the devices having a media list with entries comprising media attributes for image receiving media, each entry comprising media identification attributes to distinguish individual image receiving media and additional attributes that are associated with the media, the method comprising the steps of:
- copying a media list of a first device to a temporary media list;
- adding to the temporary media list an entry of a media list of a second device, if the media identification attributes of that entry do not match the media identification attributes of any entry of the temporary media list;
- supplementing the additional attributes of an entry of the temporary media list with the additional attributes of an entry of the media list of a second device if the media identification attributes of both entries match; and
- replacing the media list of the first device by the temporary media list.

2. Method according to claim 1, wherein the media identification attributes comprise at least two attributes.

3. Method according to claim 2, wherein the media identification attributes comprise at least one of the attributes media name, media width, media height, media weight, and media colour.

4. Method according to claim 1, wherein the step of supplementing the additional attributes of an entry of the media catalog is performed using merging rules that depend on the kind of attributes.

5. Method according to claim 1, wherein the additional attributes comprise media description attributes that contain information about the media that is independent of any application of the media in a device.

6. Method according to claim 5, wherein the media description attributes comprise a media thickness, a media ordering number or a media gloss parameter.

7. Method according to claim 1, wherein the additional attributes comprise device specific attributes that contain parameters for the application of the media in a device type.

8. Method according to claim 7, wherein the device specific attributes comprise a fuse temperature parameter, a decurl parameter or media registration parameters.

9. Device configured to perform a task for printing image data on an image receiving medium, comprising a memory for keeping a media list with entries comprising media attributes for image receiving media, each entry comprising media identification attributes to distinguish individual image receiving media and additional attributes that are associated with the media, communication means for communicating with a second device and a media list module for synchronisation of the media list with a media list of a second device, wherein the media list module is configured to perform a method for managing media according to claim 1.

10. Print system for printing an image on an image receiving material, the system comprising at least two devices according to claim 9.

## Patentansprüche

1. Verfahren zum Verwalten von Medien in einem System, das wenigstens zwei Einrichtungen aufweist, die an ein Netzwerk angeschlossen sind und dazu ausgebildet sind, eine Funktion zum Drucken von Bilddaten auf ein Bildempfangsmedium auszuführen, wobei die Einrichtungen eine Medienliste mit Einträgen aufweisen, die Attribute für Bildempfangsmedien umfassen, wobei jeder Eintrag Medienidentifizierungsattribute zur Unterscheidung einzelner Bildempfangsmedien sowie zusätzliche Attribute enthält, die den Medien zugeordnet sind, welches Verfahren die folgenden Schritte aufweist:
- kopieren einer Medienliste einer ersten Einrichtung in eine temporäre Medienliste;
- hinzufügen eines Eintrags aus einer Medienliste einer zweiten Einrichtung zur der temporären Medienliste, wenn die Medienidentifizierungsattribute dieses Eintrags nicht mit den Medienidentifizierungsattributen irgendeines Eintrags in der temporären Medienliste übereinstimmen;
- ergänzen der zusätzlichen Attribute eines Eintrags in der temporären Medienliste um die zusätzlichen Attribute eines Eintrags in der Medienliste einer zweiten Einrichtung, wenn die Medienidentifizierungsattribute beider Einträge übereinstimmen; und
- ersetzen der Medienliste der ersten Einrichtung durch die temporäre Medienliste.

2. Verfahren nach Anspruch 1, bei dem die Medienidentifizierungsattribute wenigstens zwei Attribute umfassen.

3. Verfahren nach Anspruch 2, bei dem die Medienidentifizierungsattribute wenigstens eines der Attribute: Medienname, Medienbreite, Medienhöhe, Mediengewicht und Medienfarbe umfassen.

4. Verfahren nach Anspruch 1, bei dem der Schritt des Ergänzens der zusätzlichen Attribute eines Eintrags in dem Medienkatalog ausgeführt wird unter Verwendung von Zusammenführungsregeln, die von der Art der Attribute abhängig sind.

5. Verfahren nach Anspruch 1, bei dem die zusätzlichen Attribute Medienbeschreibungsattribute umfassen, die Information über die Medien enthalten, die unabhängig von irgendeiner Anwendung der Medien in der Einrichtung ist.

6. Verfahren nach Anspruch 5, bei dem die Medienbeschreibungsattribute eine Mediendicke, eine Medienordnungsnummer oder einen Medienglanzparameter umfassen.

7. Verfahren nach Anspruch 1, bei dem die zusätzlichen Attribute einrichtungsspezifische Attribute umfassen, die Parameter für die Anwendung der Medien in einem Einrichtungstyp enthalten.

8. Verfahren nach Anspruch 7, bei dem die einrichtungsspezifischen Attribute einen Fixierungstemperaturparameter, einen Glättungsparameter oder Medienregistrierungsparameter umfassen.

9. Einrichtung, die dazu konfiguriert ist, eine Funktion zum Drucken von Bilddaten auf ein Bildempfangsmedium auszuführen, mit einem Speicher zum Speichern einer Medienliste mit Einträgen, die Medienattribute für Bildempfangsmedien enthalten, wobei jeder Eintrag Medienidentifizierungsattribute zur Unterscheidung der einzelnen Bildempfangsmedien sowie zusätzliche Attribute enthält, die den Medien zugeordnet sind, mit einer Kommunikationseinrichtung für die Kommunikation mit einer zweiten Einrichtung, und einem Medienlistenmodul zur Synchronisierung der Medienliste mit einer Medienliste einer zweiten Einrichtung, wobei das Medienlistenmodul dazu konfiguriert ist, ein Verfahren zur Verwaltung von Medien gemäß Anspruch 1 auszuführen.

10. Druckersystem zum Drucken eines Bildes auf ein Bildempfangsmaterial, welches System wenigstens zwei Einrichtungen gemäß Anspruch 9 aufweist.

## Revendications

1. Procédé de gestion de supports dans un système comprenant au moins deux dispositifs qui sont connectés à un réseau, les dispositifs étant configurés pour réaliser une tâche pour imprimer des données d'image sur un support récepteur d'image, les dispositifs ayant une liste de supports avec des entrées comprenant des attributs de support pour des supports récepteurs d'image, chaque entrée comprenant des attributs d'identification de support pour différencier des supports récepteurs d'image individuels et des attributs supplémentaires qui sont associés aux supports, le procédé comprenant les étapes consistant à :
- copier une liste de supports d'un premier dispositif vers une liste de supports temporaire ;
- ajouter à la liste de supports temporaire une entrée d'une liste de supports d'un second dispositif, si les attributs d'identification de support de cette entrée ne correspondent pas aux attributs d'identification de support d'une entrée quelconque de la liste de supports temporaire ;
- compléter les attributs supplémentaires d'une entrée de la liste de supports temporaire avec les attributs supplémentaires d'une entrée de la liste de supports d'un second dispositif si les attributs d'identification de support de deux entrées correspondent ; et
- remplacer la liste de supports du premier dispositif par la liste de supports temporaire.

2. Procédé selon la revendication 1, dans lequel les attributs d'identification de support comprennent au moins deux attributs.

3. Procédé selon la revendication 2, dans lequel les attributs d'identification de support comprennent au moins un des attributs nom des supports, largeur des supports, hauteur des supports, poids des supports et couleur des supports.

4. Procédé selon la revendication 1, dans lequel l'étape pour compléter des attributs supplémentaires d'une entrée du catalogue de supports est réalisée à l'aide de règles de fusion qui dépendent de la sorte d'attributs.

5. Procédé selon la revendication 1, dans lequel les attributs supplémentaires comprennent des attributs de description de supports qui contiennent des informations concernant les supports qui sont indépendantes d'une application quelconque des supports dans un dispositif.

6. Procédé selon la revendication 5, dans lequel les attributs de description de supports comprennent une épaisseur des supports, un numéro de commande des supports ou un paramètre de brillance des supports.

7. Procédé selon la revendication 1, dans lequel les attributs supplémentaires comprennent des attributs spécifiques au dispositif qui contient des paramètres pour l'application des supports dans un type de dispositif.

8. Procédé selon la revendication 7, dans lequel les attributs spécifiques au dispositif comprennent un paramètre de température de fusion, un paramètre de redressement ou des paramètres de repérage de supports.

9. Dispositif configuré pour réaliser une tâche pour imprimer des données d'image sur un support récepteur d'image, comprenant une mémoire pour garder une liste de supports avec des entrées comprenant des attributs de supports pour des supports récepteurs d'image, chaque entrée comprenant des attributs d'identification de supports pour différencier des supports récepteurs d'image individuels et des attributs supplémentaires qui sont associés aux supports, un moyen de communication pour communiquer avec un second dispositif et un module de liste de supports pour une synchronisation de la liste de supports avec une liste de supports d'un second dispositif, dans lequel le module de liste de supports est configuré pour réaliser un procédé de gestion de supports selon la revendication 1.

10. Système d'impression pour imprimer une image sur un matériau récepteur d'image, le système comprenant au moins deux dispositifs selon la revendication 9.
